(19) Europäisches Patentamt
European Patent Office
Office européen des brevets

(11) **EP 2 587 703 A1**

(12) **EUROPEAN PATENT APPLICATION**

(43) Date of publication:
**01.05.2013 Bulletin 2013/18**

(51) Int Cl.:
*H04L 1/16* (2006.01)  *H04L 1/18* (2006.01)
*H04L 27/18* (2006.01)  *H04L 27/34* (2006.01)

(21) Application number: **12290142.4**

(22) Date of filing: **26.04.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **25.10.2011 EP 11290495**

(71) Applicant: **Alcatel Lucent
75007 Paris (FR)**

(72) Inventors:
• **Maes, Jochen
2431 Laakdal (BE)**

• **Vanderhaegen, Dirk
1780 Wemmel (BE)**
• **Timmers, Michael
3020 Herent (BE)**
• **Van Bruyssel, Danny
2820 Bonheiden (BE)**

(74) Representative: **Plas, Axel Ivo Michel
IP HILLS NV
Hubert Frère-Orbanlaan 329
9000 Gent (BE)**

(54) **A data retransmission request device, a data transmitter, and a data retransmission method for multi-tone systems**

(57)   In a multi-tone data transmission system, data are modulated on a set of M tones for being transmitted between a transmitter (110) and a receiver (120). According to the invention, the data retransmission request device (124) in such system is adapted to request re-transmission of a data transmission unit (22) that is hierarchically modulated at a particular hierarchical level (L3). The transmitter (110) can de-activate a number of lowest hierarchical levels based on the number or rate of received retransmission requests.

Fig. 1

EP 2 587 703 A1

**Description**

**Field of the Invention**

The present invention generally relates to protection of multi-tone data transmission systems like for instance a Discrete Multi-Tone (DMT) based Digital Subscriber Line (DSL) system against time-varying noise, e.g. resulting from a new starting line or impulse noise induced by electrical appliances in the vicinity of the line. The invention in particular concerns intelligent retransmission of erroneously received data transmission units (DTUs) in order to optimize throughput and stability of the connection in the presence of time-varying noise.

**Background of the Invention**

It is well-known to tackle time-varying noise in multi-tone data transmission systems, i.e. transmission systems wherein data bits are modulated on plural tones or carriers to be conveyed between a transmitter and receiver, through various online reconfiguration mechanisms. These online reconfiguration mechanisms for instance include bitswap, Seamless Rate Adaptation (SRA) and Save Our Showtime (SOS) mechanisms.

A bitswap mechanism moves bits from tones with increasing noise to other tones without impact on the overall bitrate between transmitter and receiver.

Seamless Rate Adaptation adjusts the overall bit rate between transmitter and receiver downwards or upwards depending on the noise margin variation. In addition, the bitloading of the tones is adjusted in function of the changed overall bit rate.

Save Our Showtime is applied in case of a strong noise increase at a point in time where the noise margin of the multi-tone system is negative. Since it is impossible to accurately determine how many bits each carrier can convey, the bitloading is drastically decreased to avoid resynchronization or re-initialization of the multi-tone system. SOS is usually followed by SRA for upwards adaptation of the overall bit rate.

The above described online reconfiguration mechanisms are disadvantageous in various aspects. The receiver first needs to measure the SNR (Signal-to-Noise Ratio) and assess the SNR variation. Next, the online reconfiguration must be negotiated between transmitter and receiver through a signalling protocol. Also the timing of online reconfiguration must be synchronised between transmitter and receiver. This may for instance be realised through a flag on the SYNC symbol on DMT based DSL systems. As a consequence, online reconfiguration is rather slow. In 4 kHz DMT based DSL systems, i.e. DSL systems that use a set of 4 kHz spaced apart carriers, the expected update time for online reconfiguration mechanisms is not below 128 DMT symbols or 32 milliseconds and also the SNR measurement takes some time depending on the necessary accuracy. For SRA in VDSL, generation of the EOC or Embedded Operations Channel message, transmission of the EOC message, interpretation of the EOC message, and waiting for the SYNC symbol may involve a total reaction time of up to 400 milliseconds. When repeated partially for every group of 128 carriers saved through SOS, the online reconfiguration from increase to full-band execution may even occupy up to 1 second. As a result, transmission errors during several tens of milliseconds up to several seconds after a noise increase must be corrected through mechanisms different than online reconfiguration.

A fast way to correct transmission errors consists in retransmission of the erroneously received data transmission units. Thereto, the transmitter is equipped with a retransmission buffer that stores recently transmitted data transmission units. Upon receipt of an erroneous data transmission unit, the receiver requests retransmission through an Automatic Repeat request (ARQ). Upon receipt of the ARQ, the transmitter sends the stored copy of the data transmission unit to the receiver.

Although a retransmission scheme can be used to deal with noise increases in multi-tone data transmission systems up to the point in time where the bitloading has been adjusted through online reconfiguration mechanisms, retransmission is limited in capacity and introduces substantial overhead. Due to memory cost constraints and standardization requirements, the retransmission buffer typically stores transmitted data for a duration up to the end-to-end latency budget, typically configured by the operator or predetermined, e.g. about 10 milliseconds. In case of a strong noise increase, this may be insufficient to correct all transmission errors within the time interval required for online reconfiguration. As a result, traditional retransmission in combination with online reconfiguration may be unable to avoid line instabilities such as resynchronizations or re-initialisations. Further, traditional retransmission of multi-tone symbols inherently impacts the instantaneous throughput of the line dramatically since the retransmitted data symbols occupy all or nearly all remaining bandwidth in case of a strong noise increase.

European Patent Application EP 1 011 245 entitled "Transmitter and Receiver and Data Transmission Method" describes hierarchical data modulation and data demodulation in single carrier communication systems (QPSK, BPSK, 16QAM based). In order to improve transmission efficiency, the receiver performs hierarchical demodulation, i.e. data transmission units named cells in EP 1 011 245 are demodulated from particular hierarchical noise levels. Thereafter, the receiver performs error detection and requests retransmission of an erroneous cells demodulated from a particular hierarchical level. The transmission efficiency is increased since the amount of data that must be retransmitted is reduced.

EP 1 011 245 does not guarantee a stable line with optimized instantaneous throughput in case of strong noise increases. Continued transmission of DTUs on hierarchical levels that are affected by a strong noise increase will impact the instantaneous throughput because of the retransmission requests for such hierarchical levels and of inter-level interference.

It is an objective of the present invention to disclose a system and method that improves the stability and instantaneous throughput of multi-tone data transmission under time varying noise, such as strong noise increases. More particularly, it is an objective of the present invention to disclose an improved data retransmission request device, a data transmitter and a data retransmission method for use in multi-tone data transmission systems that resolve the above mentioned drawbacks of existing solutions.

### Summary of the Invention

According to the present inventions, the above mentioned shortcomings of existing time-varying noise cancelling mechanisms are resolved by a data transmitter for use in a multi-tone data transmission system wherein data are modulated on a set of M tones for being transmitted between the data transmitter and a receiver, the data transmitter being defined by claim 1, comprising:

- a retransmission buffer adapted to temporarily memorize transmitted data transmission units;
- a retransmission request receiving module adapted to receive and interpret a request for retransmission of a data transmission unit that is hierarchically modulated at a particular hierarchical level;
- a retransmission module adapted to retransmit the data transmission unit; and
- a modulation module adapted to de-activate a number of lowest hierarchical levels based on a number or rate of received retransmission requests.

Thus, the current invention takes benefit of a hierarchical modulation scheme and requests the data transmitter to retransmit only data modulated at a particular hierarchical level in the modulation scheme. The overall error probability and consequently the amount of retransmission requests is further decreased by optimising the error probability of the next retransmissions by temporarily or permanently stopping the mapping of DTUs to some hierarchical levels that are lower than the hierarchical level of retransmitted DTUs. To also optimise error probability of other DTUs, the hierarchical levels that need to be stopped are the lowest ones. The deactivation is controlled by the transmitter and based on information available to its retransmission engine, e.g. the number of received retransmission requests or the rate of received retransmission requests (or equivalently the amount of retransmissions at each lifetime). As a result, the retransmission will be able to deal with significant noise increases without having to retransmit all data contained in one or more multi-tone symbols, e.g. DMT symbols, while also making sure that the retransmissions have a very low probability to exceed a certain lifetime, as defined by the end-to-end latency budget.

The overall number of retransmission requests will decrease thanks to the current invention, and the amount of data to be retransmitted per retransmission request will be smaller. As a direct result thereof, the chances decrease that data are not yet received correctly after the end-to-end latency budget. The reliability of the multi-tone transmission system in situations of strong time-varying noise consequently increases. In addition, the instantaneous throughput in the presence of strong noise increases improves since the present invention reduces the overall amount of data retransmitted to correct errors significantly in comparison with traditional retransmission systems wherein lengthy DTUs that are mapped onto symbols uncorrelated with the modulation scheme, are retransmitted, even if only a few bits thereof, modulated on affected tones or with constellations that are more error-sensitive, are erroneously received. Thanks to the increased throughput, the multi-tone transmission system may stay synchronized during strong noise increases.

To apply hierarchical modulation/demodulation, data transmission units or DTUs are mapped to time frames of Orthogonal Frequency Division Multiplexing (OFDM) symbols in a hierarchical fashion. The different bits of one quadrature amplitude modulation (QAM) symbol on a frequency tone or carrier of the OFDM scheme have a different bit error ratio due to a different distance between the constellation points that represent different values for these bits. Each constellation point of the QAM symbol represents the same number of bits. For instance in Gray mapping, neighboring constellation points will differ in the value of a single of those bits. Across constellation points, not all bits vary as frequently. The bit with the highest bit error ratio on the in-phase component will alter its value between neighboring constellation points with different in-phase value. On the other hand, the bit with the lowest bit error ratio on the in-phase component will take the same value for the entire quadrant of the constellation grid, and will differ only across quadrant. This bit is called the sign bit of the in-phase component. The same applies to the quadrature component. Therefore, a hierarchal modulation exists on each frequency tone. Traditionally, a DTU may be mapped to bits having a random position in the hierarchy. Hence, the hierarchy is not exploited. By grouping bits of different frequency tones such that a group consists of bits that are at the same position in the hierarchy, a hierarchically modulated OFDM or multi-carrier system is created. As a result, a DTU can be modulated onto a specific hierarchical level. Higher hierarchical levels will observe a lower DTU error ratio than lower hierarchical levels. Hence, the lowest hierarchical level may be considered noise layer 1, since it is the level that is closest to the noise, as it is impacted most by noise. Advantage can be taken of the hierarchical levels by placing retransmissions or error sensitive services to the higher layers.

The present invention further takes advantage of the hierarchical levels by de-activating or turning off lower levels in the hierarchy. Turning off the lowest level, i.e. noise layer 1, is done such that the distance between neighboring constellation points increases for all bits, and hence will increase the noise resiliency of all remaining layers. Likewise, noise layers 1 and 2 can be turned off for further resiliency of the remaining layers against noise increase. Turning off an intermediate layer will improve the error rate of the higher layers, while not affecting lower layers.

By indexing all DTUs, the so-obtained communication system is fully transparent: the transmitter can decide, for example based on retransmission request information, to turn on or off a number of layers. The receiver, not necessarily knowing which layers are turned on or off, will demap and decode all hierarchical layers. If some layers were off, the receiver will not find a valid DTU identity and will therefore not positively acknowledge any DTU for those layers. Hence, the data path remains intact.

It is noticed that in the retransmission request, the DTU to be retransmitted may be identified through its unique identifier, or the DTU may be identified through the tone group whereon it is modulated, the hierarchical level whereat it is modulated, and a symbol identification.

According to an optional aspect defined by claim 2, the modulation module in the data transmitter according to the present invention may be adapted to transmit original data not coming from the retransmission buffer with one or more lowest hierarchical layers de-activated.

Thus, original data are transmitted with one or several lowest hierarchical layers deactivated. In such embodiment, the instantaneous throughput of original data under strong noise increases will be improved.

Alternatively, as defined by claim 3, the modulation module in the data transmitter according to the present invention may be adapted to transmit retransmitted data coming from the retransmission buffer with one or more lowest hierarchical layers de-activated.

Thus, retransmitted data are transmitted with one or several lowest hierarchical layers deactivated. In such embodiment, the instantaneous throughput of retransmitted data under strong noise increases will be improved.

According to yet another alternative, defined by claim 4, the modulation module in the data transmitter according to the present invention may be adapted to transmit both original data not coming from the retransmission buffer and retransmitted data coming from the retransmission buffer with one or more lowest hierarchical layers de-activated.

Thus, both original data and retransmitted data are transmitted with one or several lowest hierarchical layers deactivated. In such embodiment, the instantaneous throughput of original and retransmitted data under strong noise increases will be optimized. Different metrics may be applied for deactivation of layers for original data and retransmitted data, as will be explained further below.

In accordance with an embodiment of the invention defined by claim 5, the modulation module in the data transmitter according to the invention comprises:

- means to determine from the received retransmission requests for data transmission units in one or more time frames a ratio $R_{EF}$ of error-free throughput relative to maximum throughput in case no hierarchical layers are de-activated;
- means to determine for an integer value L greater than or equal to 1, with L-1 being the number of currently de-activated layers, a threshold of remaining capacity with L lowest layers de-activated;
- means to verify if said ratio $R_{EF}$ is smaller than the threshold; and
- means to deactivate L lowest layers if the ratio $R_{EF}$ is smaller than the threshold.

Thus, a preferred metric for deciding what amount of lowest hierarchical layers will be deactivated is threshold based. The data transmitter learns what its error-free DTU throughput $R_{EF}$ is from the re-transmission requests received for one or several transmitted time frames. Such time frame can be a fixed length Time Division Duplexing or TDD timeslot. Such TDD frame or time frame typically contains a number of data symbols each containing a number of DTUs. When as a result of increased noise this error-free throughput goes below the capacity of a reduced set of layers obtained by deactivating the lowest L layers, the transmitter shall deactivate the lowest L layers. The capacity of the reduced set of layers, i.e. the layers above layer L, can be determined by the transmitter since the transmitter is knowledgeable on the bit allocation table specifying the number of bits allocated to the different noise layers or hierarchical layers on all carriers. Since the $R_{EF}$ parameter can be determined by both the data transmitter and the receiver, both can prepare for transmission and reception of data with the L lowest hierarchical layers deactivated during the next time frame. This way, channel and noise estimation at the receiver and determining the new bit allocation table after deactivation of the L lowest hierarchical layers can be done quickly.

As is further specified in claim 6, the means to determine the ratio $R_{EF}$ may comprise:

- means for counting and/or memorizing a number of data transmission units transmitted as part of one or more time frames, TB;
- means for counting and/or memorizing a total number of data transmission units in the one or more time frames retransmitted;
- means for determining and/or memorizing a maximum number of data transmission units that could have been transmitted as part of the one or more time frames in case no hierarchical levels would have been de-activated, $TB_0$; and
- means for determining the ratio $R_{EF}$ by the formula:

$$R_{EF} = \frac{TB - EB}{TB_0} \, .$$

Thus, with knowledge of the number of DTUs in a time frame, knowledge of the number of retransmission requests received for that time frame, and knowledge of the theoretical maximum amount of DTUs that could have been transmitted as part of the time frame should all hierarchical layers have been activated, the transmitter can easily calculate a value for the error-free throughput parameter $R_{EF}$ used in the threshold based criterion to decide on the deactivation of layers. The so calculated value represents the error-free throughput relative to the total throughput with all layers active. Obviously, this parameter can be calculated over a single time frame or over a plural number of time frames to avoid overreaction in case of a very short transient noise impulse. It is noticed that a request for retransmission within the context of the present invention is either to be construed as a negative acknowledgement whereby the receiver requests retransmission of a corrupted DTU (explicit request for retransmission) or as a positive acknowledgement whereby the receiver acknowledges valid reception of a DTU, and whereby the transmitter infers which DTUs have been erroneously received and needs to be retransmitted (implicit request for retransmission). In case of positive acknowledgements, TB-EB represents the number of positively acknowledged DTUs. In case of negative acknowledgements, EB represents the number of negatively acknowledged DTUs.

As is further specified by claim 7, the means to determine the threshold may comprise:

- means for determining the remaining capacity by summing the number of bits in a bit allocation table over respective carriers in remaining hierarchical layers with L lowest layers de-activated;
- means for determining the maximum capacity by summing the number of bits in a bit allocation table over all carriers and aii hierarchical layers; and
- means for determining the threshold as a quotient of the remaining capacity and the maximum capacity.

Thus, the threshold in the criterion for deciding on deactivation of the lowest one layer may be calculated according to the formula:

$$\frac{\sum_{n=2}^{L_{max}} b^{N_n}}{\sum_{n=1}^{L_{max}} b^{N_n}}$$

Alternatively, if currently X-1 layers are de-activated, for deactivating additional layer X, the threshold may be calculated according to the formula:

$$\frac{\sum_{n=X+1}^{L_{max}} b^{N_n}}{\sum_{n=1}^{L_{max}} b^{N_n}}$$

Herein:

n represents an integer index for the hierarchical levels;
X represents the index of the highest deactivated layer;
$b^n$ represents a total number of bits in noise layer or hierarchical layer n; and
$L_{max}$ represents an index value of the highest hierarchical level.

According to a further optional aspect of the data transmitter according to the present invention, as defined by claim 8, the modulation module is further adapted to iteratively re-activate the highest de-activated hierarchical layer in case an amount of retransmission requests received for data transmission units that form part of one or more time frames drops below a predetermined threshold.

Indeed, in addition to deactivation of the lowest hierarchical layers in case of a noise increase, the transmitter may also automatically re-activate hierarchical layers, one by one, in case of noise decrease. As soon as one or a predetermined amount of time frames is transmitted without retransmission requests (or with an amount of retransmission requests that stays below a predetermined threshold), the transmitter may re-activate the highest deactivated layer partially to verify the error rate and next fully to gain capacity. This may be repeated iteratively until all hierarchical layers are active or the number of retransmission requests has driven the error-free throughput to a level below the above criterion threshold. In a specific implementation, layers shall be re-activated only when no retransmission requests are received. In such implementation, no threshold shall be installed, but it is evident that this implementation is the technological equivalent of a threshold = 0 or 1.

As further specified by claim 9, the retransmission module in the transmitter according to the present invention may further be adapted to allocate retransmitted data to hierarchical layers higher than original data as soon as the remaining part of the end-to-end latency budget of the retransmitted data (also called the TTL or Time To Live of the DTU) is below a certain threshold.

Thus, in an alternative implementation, retransmissions and original data are sent at the same active layers. If however the remaining part of the end-to-end latency budget of a DTU in the retransmission buffer has dropped below a certain threshold, as may be the case for instance after the fourth or fifth retransmission, a subsequent retransmission may be made more robust by allocating the DTU to hierarchical layers higher than the original data and other retransmissions.

According to another optional aspect defined by claim 10, the modulation module in the data transmitter according to the present invention may be adapted to transmit re-transmitted data with a second number of lowest hierarchical levels de-activated, the second number being higher than the number of de-activated hierarchical layers.

Hence, original data and retransmitted data may be transmitted with different amounts of layers de-activated, and also the criteria applied to determine the number of de-activated layers for original data and retransmitted data may differ. This way, retransmissions may be made more robust than original data.

According to a first possibility defined by claim 11, the modulation module is adapted to configure the second number equal to said number plus one.

Such criterion is simple to implement and increases the SNR for retransmissions by 6 dB versus original data.

Alternatively, as defined by claim 12, the modulation module may be adapted to initially configure the second number equal to said number, and to increase the second number by one as soon as an error ratio of data transmission units after maximum number of retransmissions exceeds a predetermined target error ratio.

Thus, the criterion to increase the second number, i.e. the number of deactivated layers for retransmissions may for example be expressed as:

$$\left(\frac{EB}{TB}\right)^{N_{arqMax}+1} 0.1^{N_{arqMax}} > BLER_{target}$$

Herein,

- TB represents the number of DTUs that have been transmitted as part of the time frame or the time frames that are considered to apply the criterion;
- EB represents the number of DTUs for which a retransmission request has been received;
- $N_{arqMax}$ represents the maximum number of retransmissions possible;

- 0.1 is an approximation of $\left(\dfrac{BLER_{priorARQ,Lmax}}{BLER_{priorARQ}}\right)$, i.e. the ratio of the DTU error ratio prior to retransmission of the highest noise layer and of the combination of layers;

- $\left(\dfrac{EB}{TB}\right)^{N_{arqMax}+1} 0.1^{N_{arqMax}}$ represents an estimate of the DTU error ratio after retransmission on the basis of the received retransmission requests; and

- BLER$_{target}$ represents a predetermined target error ratio that must not be exceeded, e.g. $10^{-10}$.

A retransmission system may be requested to retransmit a data transmission unit multiple times. For instance if the first retransmission was received erroneously, the receiver may request a second retransmission. Due to the limited end-to-end latency budget, only a limited number of retransmissions can be performed, in the order of $N_{arqMax}$=5. The number of deactivated layers for retransmissions may be different depending on the number of required retransmissions per data transmission unit. For instance, if for a certain time frame only first retransmissions are required, then the number of de-activated layers can be kept low. If for a certain frame retransmissions are required for DTUs that have been retransmitted, a number of times approaching $N_{arqMax}$, then the number of de-activated layers can be increased.

This is defined by claim 13, wherein the modulation module in the transmitter according to the present invention is adapted to increase the second number as soon as a latency budget of said retransmitted data is below a certain threshold.

In addition to a data transmitter as defined by claim 1, the present invention relates to a corresponding data retransmission method in a multi-tone data transmission system wherein data are modulated on a set of M tones and transmitted between a transmitter and a receiver, the data retransmission method being defined by claim 14, comprising:

- temporarily memorizing transmitted data transmission units in the transmitter;
- requesting to the transmitter retransmission of a data transmission unit that is hierarchically modulated at a particular hierarchical level;
- retransmitting the data transmission unit; and
- de-activating a number of lowest hierarchical levels based on a number or rate of received retransmission requests.

The current invention further also relates to a data receiver for use in a multi-tone data transmission system wherein data are modulated on a set of M tones for being transmitted between a data transmitter and the receiver, the data receiver being defined by claim 15, comprising:

- a hierarchical demodulation module adapted to demodulate a data transmission unit from a particular hierarchical level;
- means adapted to verify if the data transmission unit is received erroneously;
- a retransmission request transmitting module adapted to generate and transmit a request for retransmission of the data transmission unit;
- the hierarchical demodulation module being further adapted to learn a number of de-activated lowest hierarchical levels from a unique identification of the data transmission unit, a position of the data transmission unit in a data symbol, and an identification of the particular hierarchical level.

Although deactivation of the lowest layers is transparent to the data path in the receiver - the receiver can demodulate all hierarchical layers and will recognize no valid DTUs on the de-activated layers - the control path is affected when certain control parameters are derived from data symbols and the receiver may wish to gain knowledge on the de-activated layers as quickly as possible for SNR measurements and updating the bit allocation table. By indexing the DTUs, i.e. assigning unique, increasing identity numbers to the DTUs, and logically mapping the DTUs to layers and symbols, the receiver can be adapted to autonomously determine the number of de-activated lowest hierarchical layers. The receiver can derive the identity (index number) and the position in data symbol/noise layer of each correctly received DTU. The only constraint is that the DTU must not be from noise layers 2 to $L_{max}$ of the first symbol of a time frame. The first correctly received DTU may originate from the second, third or any later symbol in a time frame. From the index number and the position in symbol/layer, the receiver can then unambiguously determine the number of de-activated layers. Since both the transmitter and receiver know the mapping of DTUs to symbols/layers, they may know for example that 8 DTUs form part of a symbol in case no layers are de-activated, and 6 DTUs form part of a symbol when the lowest layer is de-activated. If the receiver detects in the second symbol at the position of the first DTU, a DTU with index number 7 or 13 or 19, ..., it can conclude that the lowest layer is de-activated. If at this position in the second symbol a DTU with index number 9 or 17, or 25, ... is detected, the receiver can conclude that no layer has been de-activated. SNR measurements then can start from this point forward, or even on previously received data symbols if noise info was stored. The data path remains fully transparent. There is no misalignment between the transmitter and receiver according to the invention if the number of de-activated layers is not correctly derived, or if the number of de-activated layers is only derived after an amount of data symbols in the time frame.

As an alternative to detecting the amount of deactivated layers at the receiver side from the unique identification of the DTU, position of the DTU in a data symbol, and identification of the hierarchical level, a transmitter according to the invention may explicitly inform the receiver on the amount of de-activated layers. Such communication however requires additional messaging, or adaptation of existing messaging between the transmitter and receiver, and consequently is subject to standardization

The invention further also relates to a corresponding data receiving method in a multi-tone data transmission system wherein data are hierarchically modulated on a set of M tones for being transmitted between a data transmitter and a receiver, the data receiving method being defined by claim 16, comprising:

- hierarchically demodulating a data transmission unit from a particular hierarchical level;
- verifying if the data transmission unit is received erroneously;
- generating and transmitting a request for retransmission of the data transmission unit; and
- learning a number of de-activated lowest hierarchical levels from a unique identification of the data transmission unit, a position of the data transmission unit in a data symbol, and an identification of the particular hierarchical level.

**Brief Description of the Drawings**

Fig. 1 represents a functional block scheme of a multi-tone transmission system including an embodiment of the data transmitter 110 and data receiver 120 according to the present invention;

Fig. 2 illustrates hierarchical modulation as applied by the hierarchical modulator 111 that forms part of the data transmitter 110 according to the present invention drawn in Fig. 1;

Fig. 3 shows the error probability for DTUs of 64 bytes for lowest and highest power hierarchical constellations and for normal constellations in the multi-tone transmission system of Fig. 1;

Fig. 4 shows the bit allocation, i.e. the number of bits allocated per layer per symbol in the multi-tone transmission system of Fig. 1;

Fig. 5 shows the DTU error ratio for the different hierarchical layers as a function of signal-to-noise ratio in the multi-tone transmission system of Fig. 1;

Fig. 6 shows the error-free throughput after 5 retransmissions as a function of signal-to-noise ratio in the multi-tone transmission system of Fig. 1.

**Detailed Description of Embodiment(s)**

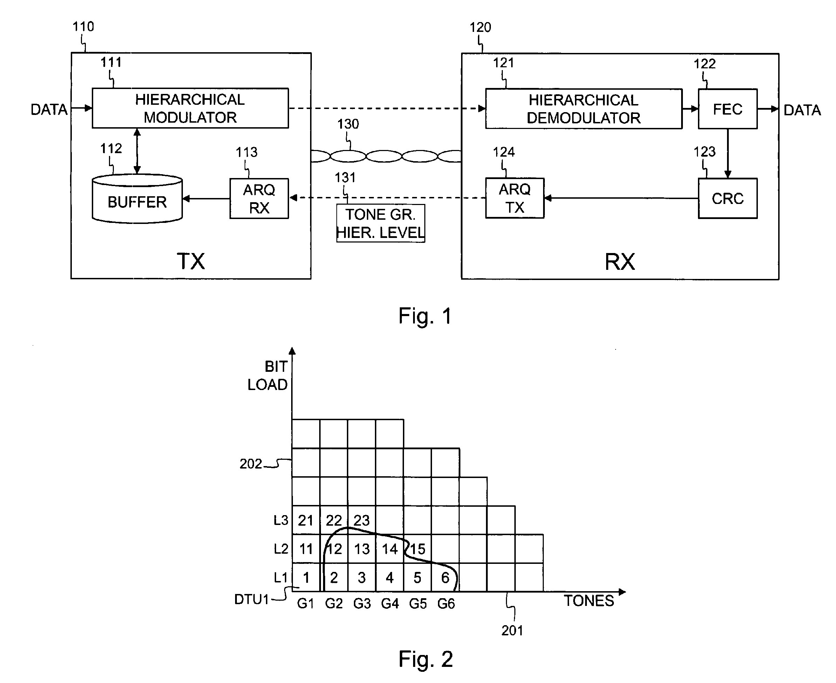

Fig. 1 shows a multi-tone transmitter, TX or 110, connected over a twisted pair line 130 to a multi-tone receiver, RX or 120. The transmitter 110 and receiver 120 typically form part of transceivers not drawn in Fig. 1. For instance, TX 110 may form part of a central office DSL transceiver and RX 120 may form part of a customer premises equipment DSL transceiver in case the downstream direction of a DSL connection is considered. Reversely, TX 110 may form part of a customer premises equipment DSL transceiver and RX 120 may form part of a central office DSL transceiver in case the upstream direction of a DSL connection is considered.

In the following paragraphs, an embodiment is described wherein it is assumed that the number of de-activated hierarchical layers is identical across successive data symbols within one or more time frames (or TDD cycles). Application of the invention however is not restricted and the skilled person will appreciate that embodiments of the invention can be contemplated wherein the number of de-activated hierarchical layers varies across data symbols within a time frame.

The transmitter 110 contains a hierarchical modulator 111 that modulates data bits DATA on a set of tones or carriers for being transmitted over the line 130. Such hierarchical data modulation is described in more detail in *the counterpart patent application of the same applicant entitled "Hierarchical and Adaptive Multi-Carrier Digital Modulation and Demodulation", incorporated herein by reference.* The data bits are subdivided in data transmission units or DTUs that are hierarchically modulated on the tones: each DTU is assigned to a particular group of tones and a particular hierarchical level, as will be explained in the following paragraphs. The transmitter 110 in addition contains a retransmission buffer 112 wherein the most recently transmitted DTUs are temporarily memorized in order to enable retransmission thereof should a DTU arrive erroneously at the receiver RX. The retransmission buffer 112 may for instance have a length that is slightly longer than a single retransmission cycle. The retransmission buffer 112 operates on instruction of the automated retransmission request receiver 113 or ARQ RX. ARQ RX receives and interprets the retransmission requests received from receiver RX and instructs the retransmission buffer 112 and/or the hierarchical modulator 111 to retransmit the DTU that was erroneously received by RX. This DTU will be identified through its unique ID, as will be explained below, or through the tone group and hierarchical level whereon it is modulated. If the DTU is no longer available in the retransmission buffer 112, it will be impossible to retransmit the DTU.

The receiver 120 contains a hierarchical demodulator 121 that demodulates the DTUs from the tones. In the embodiment illustrated by Fig. 1, each DTU is assumed to contain a mild forward error correction or FEC code. This FEC code is used by the FEC module 122 to correct for instance up to 2 bits per received DTU. The FEC code (or eventually an additional CRC code) is used by CRC module 123 to verify if the DTU is erroneous. If the DTU is erroneous, CRC module 123 shall instruct the automated retransmission request transmit module ARQ TX 124 to generate and transmit a retransmission request 131 for the erroneous DTU. This retransmission request 131 shall identify the DTU through its unique identifier, as will be explained below, or through the combination of the tone group and hierarchical level from which it was demodulated. For DTUs that are correctly received according to the CRC module 123, no retransmission is requested. Alternatively, a positive acknowledgement may be sent, meaning that the receiver requests to not retransmit the DTU in this case. These DTUs correspond to DATA in Fig. 1.

In the embodiment illustrated by Fig. 1, the hierarchical modulator 111 applies a hierarchical modulation scheme wherein b = 2 data bits are modulated at each hierarchical layer on each tone. These hierarchical layers are denoted L1, L2 and L3 along axis 202 in Fig. 2. The hierarchical modulator 111 assigns the data bits that are most error sensitive to the lowest hierarchical layer(s) and data bits that are less error sensitive to the higher hierarchical layer(s). The most error sensitive bits are for instance those bits whose alteration leads to reception of a constellation point that is close in distance in the constellation diagram to the constellation point received for the non-altered bit. By design, the uncoded bit error ratio hence will be higher in lower layers in comparison to higher layers.

For the hierarchical modulation, the tones are grouped into tone groups of N tones, where N can vary between tone groups. These tone groups are denoted G1, G2, G3, G4, G5 and G6 in Fig. 2. In order to group the tones, the transmitter TX and receiver RX measure the SNR of each tone during initialization and determine the bit load capacity of each tone. The tones are then ordered according to decreasing bit load capacity on axis 201 and groups of N tones are established, the N tones forming part of a single group having comparable properties in bit load capacities. This may include grouping the tones according to SNR. This may also include grouping the tones according to properties of the constellation order that can be sustained. Indeed, it may be beneficial to group tones of constellation order $2^{2d}$ and group tones of constellation order $2^{2d+1}$, where d is a positive integer. The benefit of placing tones with certain odd bit loading capacity in a dedicated group will be explained in more detail below.

The DTU size of the modulation and retransmission scheme illustrated by Fig. 1 and Fig. 2 is adapted to match the number of bits in a layer of a tone group: $S_{DTU} = b \times N$. These b x N bits of each DTU include data bits, cyclic redundancy check or CRC bits, and a DTU identification number or sequence number. The sequence number of DTU1 for instance is 1, as shown in Fig. 2. As can be seen from Fig. 2, the DTUs with sequence numbers 1, 2, 3, 4, 5, and 6 are modulated at the lowest hierarchical layer L1 on respective tone groups G1, G2, G3, G4, G5 and G6. The DTUs with sequence numbers 11, 12, 13, 14 and 15 are modulated at the second hierarchical layer L2 on respective tone groups G1, G2, G3, G4 and G5. The DTUs with sequence number 21, 22 and 23 are modulated at the third hierarchical layer L3 on respective tone groups G1, G2 and G3.

Alternatively, the DTU size might not be adapted to match the number of bits in a layer on a tone group. In case the DTU size is smaller, multiple DTUs may be mapped to the layer or to the layer within the tone group. In case the DTU size is larger, a fraction of the DTU is mapped to the layer or to the layer within the tone group. The remaining bits are modulated at the same hierarchical layer on a different tone group of the same data symbol, or at the same hierarchical layer and tone group of a next data symbol. The advantage of this alternative implementation is that the bit loading of the tone group or individual carriers may be adapted without a need to adapt the DTU size. It is also noticed that in an alternative embodiment, each hierarchical layer may use a different group of carriers. In such embodiment, the same tone group is not used across multiple hierarchical layers. The carrier groups may have different numbers of carriers in such embodiment.

Each DTU in the transmission queue is mapped to a hierarchical layer within a tone group. After demodulation by the demodulator 121, a FEC is performed and a cyclic redundancy check is performed on the FEC/CRC bits that form part of each DTU. In case of an erroneous DTU, e.g. as a result of increased noise that hits the layer of a tone group, the receiver RX will only request retransmission of the erroneous DTU. In Fig. 2, it is for instance assumed that the DTUs with sequence numbers 2-6, 12-15 and 22-23 arrive erroneously at the receiver 120. According to the present invention, ARQ TX 124 shall identify the layer HIER. LEVEL and tone group TONE GR. of these erroneously received DTUs in one or more retransmission request message 131. Alternatively, ARQ TX 124 may identify the erroneous DTUs through their sequence numbers when requesting retransmission thereof. One may also use a positive acknowledgement scheme wherein only correctly received DTUs are acknowledged, in combination with time-out and eventually duplicate acknowledgements for repeating DTUs.

Thanks to the hierarchical modulation, designed as explained here above to modulate more error sensitive bits on lower hierarchical levels, it suffices to identify in the retransmission request 131 for each tone group the highest layer that was erroneously received, e.g. L3 for G2, L3 for G3, L2 for G4, L2 for G5 and L1 for G6. The retransmission request receiver 113 may then be configured to automatically instruct retransmission of all DTUs modulated at lower hierarchical layers on those tone groups since the probability that the lower layers will also be in error on those tones is significant. Such implementation further enhances the efficiency of the retransmission for multi-tone systems with hierarchical modulation according to the current invention.

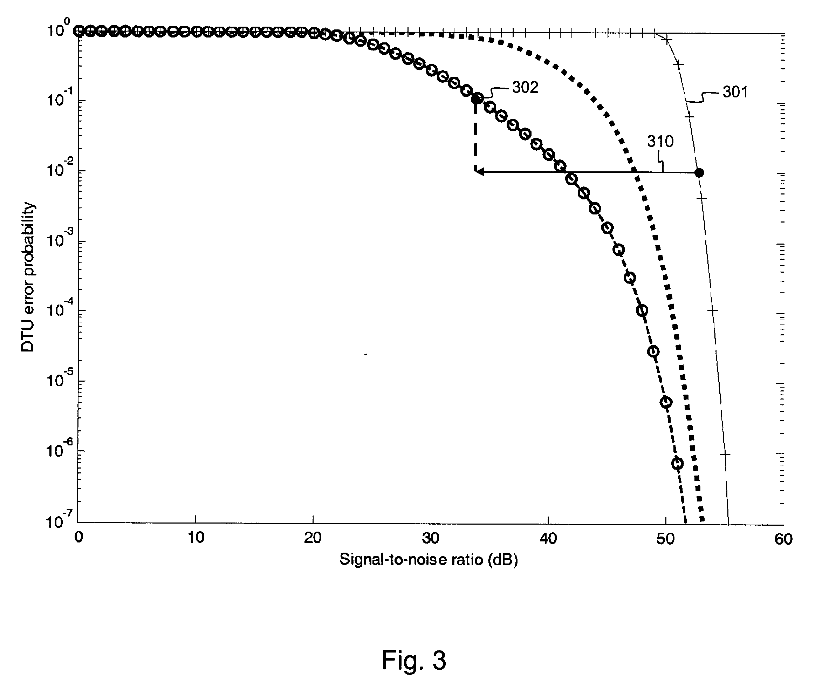

In comparison, in a multi-tone transmission system with traditional retransmission that operates on DTUs that are assembled without taking into account the modulation scheme, all DTUs may get erroneous in case a noise increase affects a few tones. In a system and method according to the current invention, the error probability on the higher layers will remain sufficiently low thanks to the hierarchical modulation, even in case of significant noise increases, e.g. up to 20 dB, to keep the line operational. This is illustrated by Fig. 3. Therein, it is assumed that each DTU comprises b x N = 512 bits, and each DTU has a FEC error correction capability of 2 bits. Fig. 3 shows the change in DTU error ratio at the different hierarchical levels as a function of noise. When operating at a 16-bit constellation, corresponding to a DTU error ratio of $10^{-7}$ for the overall constellation at 53 dB signal-to-noise ratio (dotted line in Fig. 3), a noise increase 310 of 20 dB would cause erroneous reception of DTUs modulated on the lower layers like 301 - the DTU error ratio for those layers becomes close to 1 at 55 - 20 = 33 dB signal-to-noise ratio (full line with "+" markers in Fig. 3) - but the highest layers like 302 will remain operational on a DTU error ratio of $10^{-1}$ (dashed line with "o" markers in Fig. 3). Thanks to the retransmission according to the present invention, the line will remain active during the noise increase and the line will be able to adapt the bit loading to adjust to the new line conditions.

In addition, to further decrease the error probability, the transmitter can decide to de-activate the lowest hierarchical layers by stopping the mapping of DTUs to the lowest layers. This de-activation is controlled by the transmitter and based on information available to the retransmission engine, such as the number or rate of received retransmission requests. This measure will decrease the error probability of the remaining layers. The transmitter can decide to stop mapping DTUs on the lowest hierarchical layers temporarily to increase the probability of successful transmissions, or it can permanently stop mapping DTUs to the lowest hierarchical layers to mitigate the increase of error probability resulting from a permanent noise increase. In the latter case, the line will observe a higher number of retransmissions for a duration slightly larger than the ARQ round trip time. Thereafter, the transmitter has acquired sufficient knowledge to decide shutting of the higher layers. When the noise increase is temporary, the transmitter may re-activate the lowest layers upon receiving an indication of the ending of the temporary noise increase. The activation and deactivation of the lower hierarchical layers can be performed by the transmitter without explicit coordination with the receiver, as described in the counterpart patent application of the same applicant entitled "Hierarchical and Adaptive Multi-Carrier Digital Modulation and Demodulation", incorporated herein by reference.

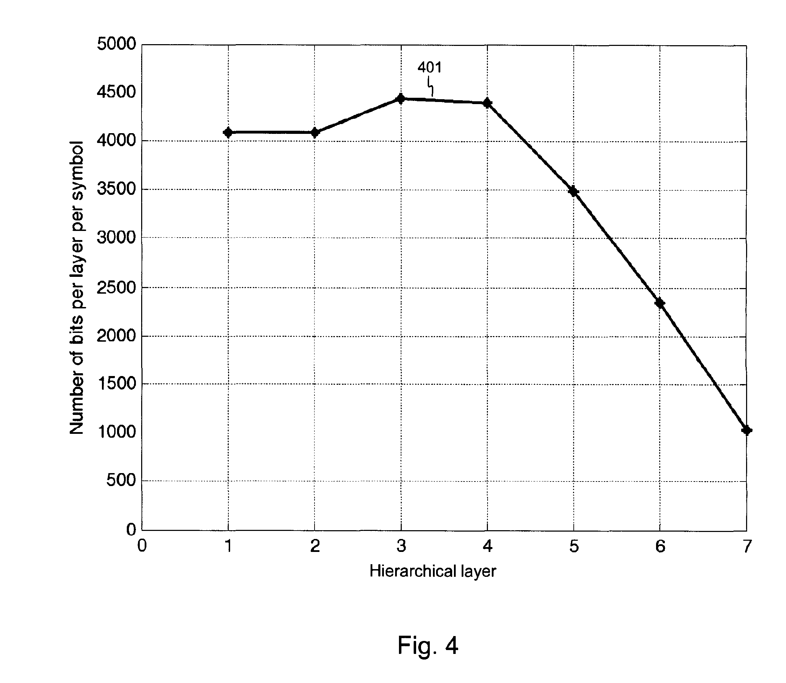

In Fig. 4, 401 shows the number of bits per hierarchical layer per symbol for a reference point where the Signal-to-Noise Ratio Margin or SNRM = 0 dB. The bit loading, i.e. the number of bits that can be transmitted in each hierarchical layer per DMT (Discrete Multi Tone) symbol hence is known. When de-activating one or more lowest layers, there will be a capacity loss corresponding with the bit loading of those layers.

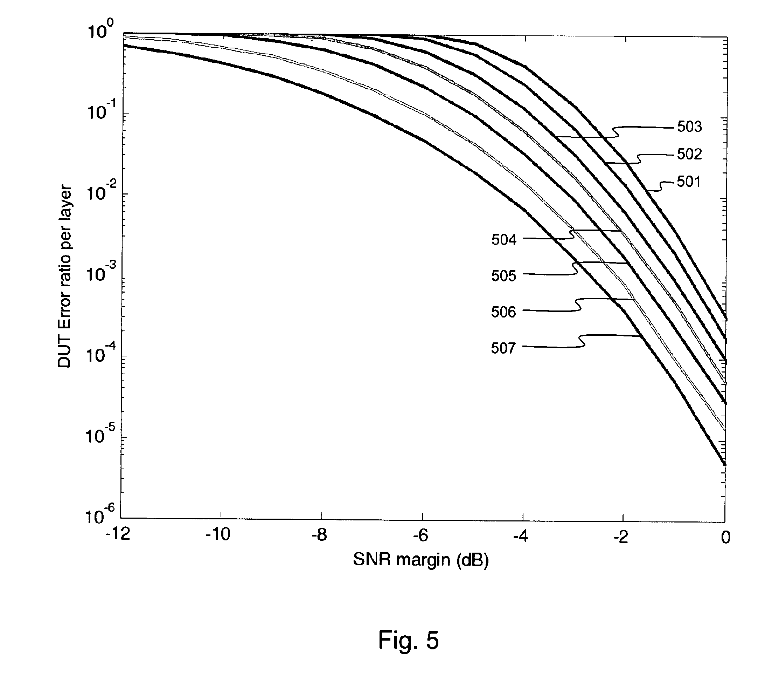

Fig. 5 shows for the hierarchical layers 1-7, the respective DTU error ratio as a function of SNR margin. The DTU error ratio's for layers 1-7 are respectively denoted 501, 502, 503, 504, 505, 506 and 507 in Fig. 5. The DTU error ratio of a hierarchical layer is higher than the DTU error ratio of any higher hierarchical layers. The higher hierarchical layers in other words are less noise sensitive and therefore require less re-transmissions.

When the error-free throughput, i.e. the percentage of DTUs for which no retransmission request is received decreases below a certain threshold, it will be more efficient to deactivate one or more lowest layers since these layers are most error sensitive and the retransmissions required for DTUs sent in these and other layers will typically occupy capacity in the higher layers.

In a TDD-based system, retransmission requests are grouped per TDD frame. Based on the retransmission requests for such a TDD frame, the modulation module 111 in transmitter 110 can at any time compute the ratio of error-free DTU throughput $R_{EF}$ relative to the obtainable throughput with all layers activated as follows:

$$R_{EF} = \frac{TB - EB}{TB_0}$$

Herein, TB is the total number of DTUs that have been transmitted as part of the TDD frame, EB is the number of DTUs for which a retransmission request has been received, and $TB_0$ is the total number of DTUs that can be transmitted if all layers are activated.

To maximize the throughput, the lowest hierarchical layer is deactivated for original data and retransmissions as soon as the error-free throughput decreases below a threshold :

$$R_{EF} < T$$

The threshold in the criterion for deciding on deactivation of the lowest one layer may be calculated according to the formula:

$$T = \frac{\sum_{n=2}^{L_{max}} b^{N_n}}{\sum_{n=1}^{L_{max}} b^{N_n}}$$

More generally, the threshold in the criterion for deciding on deactivation of the next lowest active layer X may be calculated according to the formula:

$$T = \frac{\sum_{n=X+1}^{L_{max}} b^n}{\sum_{n=1}^{L_{max}} b^n}$$

Herein:

- n represents an integer index for the hierarchical levels;
- X represents the index of the highest deactivated layer;
- $b^n$ represents a total number of bits in noise layer or hierarchical layer n; and
- $L_{max}$ represents an index value of the highest hierarchical level.

The threshold in both cases represents a measure for the remaining capacity after deactivation of the lowest active layer.
It is noticed that alternative calculations of the error-free throughput and the threshold may be proposed as well. The error-free throughput $R_{EF}$ for instance can be calculated as TB-EB, i.e. only the denominator of the above formula, in which case the formula for calculating the threshold is also reduced to the denominator:

$$T = \sum_{n=2}^{L_{max}} b^{N_n}.$$

Since the $R_{EF}$ parameter can unambiguously be determined by both the transmitter 110 and the receiver 120, both may prepare for transmission/reception with the lowest X layers deactivated during the next TDD frame, facilitating channel and noise estimation to determine a new bit allocation table and apply receiver controlled adaptive modulation as soon as possible.
Retransmissions are potentially placed in symbols with a higher amount of hierarchical layers deactivated. The preferred way in terms of capacity is to activate all layers as long as the target DTU error ratio is achieved by placing retransmissions in the top hierarchical layers. The target BLER is achieved as long as:

$$\left(\frac{EB}{TB}\right)^{N_{arqMax}+1} \left(\frac{BLER_{priorARQ,Lmax}}{BLER_{priorARQ}}\right)^{N_{arqMax}} > BLER_{target}$$

Since the DTU error ratio in the top layer is approximately an order of magnitude better than the overall DTU error ratio, retransmissions must be placed in symbols for which the lowest layer is deactivated if:

$$\left(\frac{EB}{TB}\right)^{N_{arqMax}+1} 0.1^{N_{arqMax}} > BLER_{target}$$

Herein,

- TB represents the number of DTUs that have been transmitted as part of the time frame or the time frames that are considered to apply the criterion;
- EB represents the number of DTUs for which a retransmission request has been received;
- $N_{arqMax}$ represents the maximum number of retransmissions possible;

- 0.1 is an approximation of $\left(\dfrac{BLER_{priorARQ,Lmax}}{BLER_{priorARQ}}\right)$, i.e. the ratio of the DTU error ratio prior to retransmission of the highest noise layer and of the combination of layers;

- $\left(\dfrac{EB}{TB}\right)^{N_{arqMax}+1} 0.1^{N_{arqMax}}$ represents an estimate of the DTU error ratio after retransmission on the basis of the received retransmission requests; and

- $BLER_{target}$ represents a predetermined target error ratio that must not be exceeded, e.g. $10^{-10}$.

As an alternative to the above criterion, retransmissions may be placed in symbols with one additional layer deactivated on top of the layers deactivated for original data based on the criterion above.

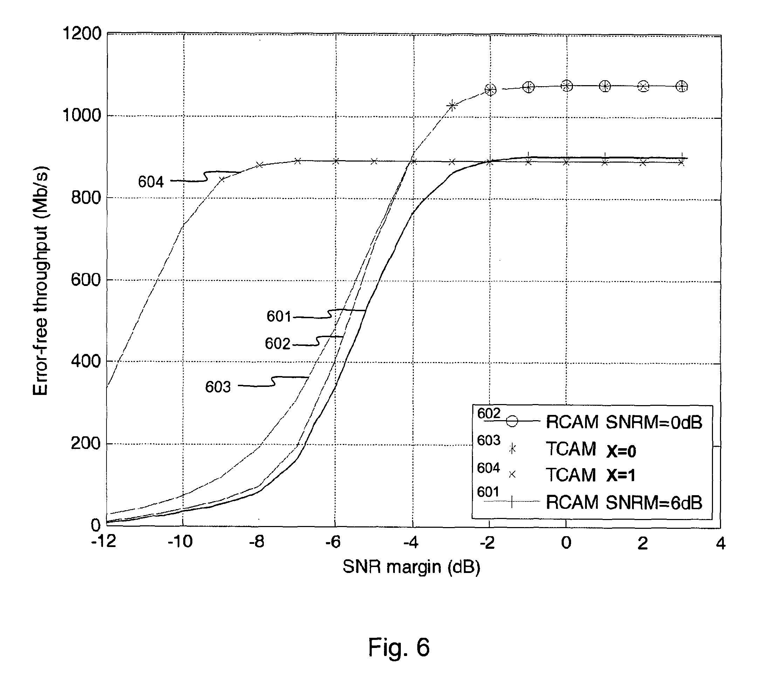

Selecting the maximum number of retransmissions to be 4, the error-free throughput is given in Fig. 6. When retransmissions are placed in the top layers with no lowest layers deactivated, i.e. curve 603, then the error-free throughput increases in comparison to curve 602 and the DTU error ratio decreases by roughly 1 dB as compared to configuring the same line at 0 dB SNRM. The rate increases significantly as compared to configuring the line at 6 dB SNRM, i.e. curve 601. By placing retransmissions in symbols for which the lowest layer is deactivated, i.e. curve 604, the error-free throughput and DTU error ratio can significantly be enhanced, especially for SNRM < -4 dB. At SNRM = -9 dB, the error-free throughput remains similar to that of the line configured at 6 dB SNRM, while the DTU error ratio remains below $10^{-10}$.

The curve 604 for the lowest one layer deactivated in Fig. 6 shows a crossover region around SNRM = -4 dB. For SNRM > -4 dB, retransmissions are placed in symbols for which the lowest layer is deactivated, while all original data that are not coming from the retransmission buffer 112 are transmitted with all layers activated. When the SNRM < -4 dB, it is more beneficial to also send the original data with the lowest layer deactivated.

The above proposed scheme with criteria for deactivating the lowest layers is fully transparent to the data path in the receiver 120. It however has implications on the control path in the receiver 120, namely SNR measurements by the receiver 120 are affected. Thereto, the receiver can determine the number of deactivated lowest layers used in a certain TDD frame. By DTU indexing and logical mapping of DTUs to layers and symbols, the receiver can derive from the identity and position in the symbol/layer of any correctly received DTU what amount of lowest layers has been deactivated. The sole constraint is that the DTU must not be from noise layers L2 to Lmax of the first symbol of the TDD frame. The first correctly received DTU may originate from e.g. the second, third or later symbol in a TDD frame. Hence, SNR measurements can start from this point onwards, or on previous symbols if noise info was stored. The data path remains fully transparent: there is no misalignment between transmitter and receiver if the amount of deactivated lowest layers is not correctly derived, or if this parameter is only derived after X symbols in the frame.

De-activation of the lowest hierarchical layers is cumbersome for constellations with odd bit loading capacity when these constellations are not represented through a rectangular constellation grid. Indeed, such constellations are typically re-shaped to a cross-shaped grid to reduce average transmit power of the constellation. Due to this, deactivation of the lowest hierarchical layers may require the transmitter to omit the re-shaping operation. Constellations where this effect would occur can be grouped together and their layer structure adapted. For instance, where for constellations with even bit load capacity each layer may contain 2 bits per tone, the lowest layer of the constellations with odd bit loading and where an omission of the re-shaping operation would be required, may contain 3 bits per tone: 2 in the in-phase component and one in the quadrature component.

It is noticed that in order to reduce the error probability of the retransmission, it is not absolutely necessary to switch off the lowest hierarchical layer. Any layer below the retransmission layer will do. The layer just below the re-transmission layer will have a comparable data rate whereas the lowest layer typically has a much larger data rate.

The retransmission in accordance with the principles of the current invention will ensure that the instantaneous throughput will scale with the optimum throughput. The retransmission will remain doing so until the bit loading has been adjusted through the slow control procedure of online reconfiguration commands inherent to bitswap, seamless rate adaptation or save our showtime. As such, the retransmission according to the current invention allows the line to remain stable and operate at highest possible throughput, even when the noise variations are fast in comparison with the online reconfiguration mechanism.

It is further noticed that in order to ensure a low delay and a low number of retransmissions of the same DTU, the retransmission advantageously occurs at the highest layer available. This way, the error probability for the retransmitted DTU is minimized.

It is also noticed that although b x N is fixed in the above described embodiment, alternative implementations wherein b x N, i.e. the number of bits that form a DTU to be modulated on a particular group of tones at a particular hierarchical layer, is variable can be thought of.

Furthermore, it is remarked that although the above described embodiment is implemented with the same amount N of tones per group, the current invention is applicable with the same advantages in an alternative scenario where the different groups have different amounts of tones, e.g. N1 tones in group G1, N2 tones in group G2, etc.

Another remark is that although the invention has been described for DSL and data transmission over fixed lines, it will be understood by the skilled person that applicability of the current invention is not limited thereto. Any multi-tone transmission system using wireline or wireless connections that are susceptible to time varying noise may be improved in terms of stability and instantaneous throughput through the retransmission technique according to the present invention.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

**Claims**

1. A data transmitter (110) for use in a multi-tone data transmission system wherein data are modulated on a set of M tones for being transmitted between said data transmitter (110) and a receiver (120), said data transmitter (110) comprising:

   - a retransmission buffer (112) adapted to temporarily memorize transmitted data transmission units;
   - a retransmission request receiving module (113) adapted to receive and interpret a request (131) for retransmission of a data transmission unit (22) that is hierarchically modulated at a particular hierarchical level (L3);
   - a retransmission module (111, 112) adapted to retransmit said data transmission unit (22); and- a modulation module (111) adapted to de-activate a number of lowest hierarchical levels based on a number or rate of received retransmission requests.

2. A data transmitter (110) according to claim 1, wherein said modulation module (111) is adapted to transmit original data not coming from said retransmission buffer (112) with one or more lowest hierarchical layers de-activated.

3. A data transmitter (110) according to claim 1, wherein said modulation module (111) is adapted to transmit retransmitted data coming from said retransmission buffer (112) with one or more lowest hierarchical layers de-activated.

4. A data transmitter (110) according to claim 1, wherein said modulation module (111) is adapted to transmit both original data not coming from said retransmission buffer (112) and retransmitted data coming from said retransmission buffer (112) with one or more lowest hierarchical layers de-activated.

5. A data transmitter (110) according to claim 1, wherein said modulation module (111) comprises:

   - means to determine from said received retransmission requests for data transmission units in one or more time frame a ratio $R_{EF}$ of error-free throughput relative to maximum throughput in case no hierarchical layers are de-activated;
   - means to determine for an integer value L greater than or equal to 1, with L-1 being the number of currently de-activated hierarchical layers, a threshold of remaining capacity with L lowest layers de-activated;
   - means to verify if said ratio $R_{EF}$ is smaller than said threshold; and
   - means to deactivate L lowest layers if said ratio $R_{EF}$ is smaller than said threshold.

6. A data transmitter (110) according to claim 5, wherein said means to determine said ratio $R_{EF}$ comprise:

   - means for counting and/or memorizing a number of data transmission units transmitted as part of one or more time frames, TB;
   - means for counting and/or memorizing a total number of data transmission units in said one or more time frames retransmitted, EB;
   - means for determining and/or memorizing a maximum number of data transmission units that could have been transmitted as part of said one or more time frames in case no hierarchical levels would have been de-activated, $TB_0$; and
   - means for determining said ratio $R_{EF}$ by the formula:

$$R_{EF} = \frac{TB - EB}{TB_0}.$$

7. A data transmitter (110) according to claim 5, wherein said means to determine said ratio threshold comprise:

   - means for determining said remaining capacity by summing the number of bits in a bit allocation table over respective carriers in remaining hierarchical layers with L lowest layers de-activated;
   - means for determining said maximum capacity by summing the number of bits in a bit allocation table over all carriers and all hierarchical layers; and
   - means for determining said threshold as a quotient of said remaining capacity and said maximum capacity.

8. A data transmitter (110) according to claim 1, wherein said modulation module (111) is further adapted to iteratively re-activate the highest de-activated hierarchical layer in case an amount of retransmission requests received for data transmission units that form part of one or more time
   frames drops below a predetermined threshold.

9. A data transmitter (110) according to claim 1, wherein said retransmission module (111, 112) is adapted to allocate retransmitted data to hierarchical layers higher than original data as soon as a latency budget of said retransmitted data is below a certain threshold.

10. A data transmitter (110) according to claim 1, wherein said modulation module (111) is adapted to transmit re-transmitted data with a second number of lowest hierarchical levels, said second number being higher than said number of de-activated hierarchical layers.

11. A data transmitter (110) according to claim 10, wherein said modulation module is adapted to configure said second number equal to said number plus one.

12. A data transmitter (110) according to claim 10, wherein said modulation module is adapted to initially configure said second number equal to said number, and to increase said second number by one as soon as an error ratio of data transmission units after maximum number of retransmissions exceeds a predetermined target error ratio.

13. A data transmitter (110) according to claim 10, wherein said modulation module is adapted to increase said second number as soon as a latency budget of said retransmitted data is below a certain threshold.

14. A data retransmission method in a multi-tone data transmission system wherein data are modulated on a set of M tones and transmitted between a transmitter (110) and a receiver (120), said data retransmission method comprising:

   - temporarily memorizing transmitted data transmission units in said transmitter (110);
   - requesting to said transmitter (110) retransmission of a data transmission unit (22) that is hierarchically modulated at a particular hierarchical level (L3);
   - retransmitting said data transmission unit (22); and
   - de-activating a number of lowest hierarchical levels based on a number or rate of received retransmission requests.

15. A data receiver (120) for use in a multi-tone data transmission system wherein data are modulated on a set of M tones for being transmitted between a data transmitter (110) and said receiver (120), said data receiver (120) comprising:

- a hierarchical demodulation module (121) adapted to demodulate a data transmission unit (22) from a particular hierarchical level (L3);
- means (122, 123) adapted to verify if said data transmission unit (22) is received erroneously;
- a retransmission request transmitting module (124) adapted to generate and transmit a request (131) for retransmission of said data transmission unit (22);
- said hierarchical demodulation module (121) being further adapted to learn a number of de-activated lowest hierarchical levels from a unique identification of said data transmission unit (22), a position of said data transmission unit (22) in a data symbol, and an identification of said particular hierarchical level (L3).

16. A data receiving method in a multi-tone data transmission system wherein data are hierarchically modulated on a set of M tones for being transmitted between a data transmitter and a receiver, said data receiving method comprising:

- hierarchically demodulating a data transmission unit (22) from a particular hierarchical level (L3);
- verifying if said data transmission unit (22) is received erroneously;
- generating and transmitting a request (131) for retransmission of said data transmission unit (22); and
- learning a number of de-activated lowest hierarchical levels from a unique identification of said data transmission unit (22), a position of said data transmission unit (22) in a data symbol, and an identification of said particular hierarchical level (L3).

Fig. 1

Fig. 2

Fig. 3

Fig. 4

Fig. 5

Fig. 6

EP 2 587 703 A1

**EUROPEAN SEARCH REPORT**

Application Number

EP 12 29 0142

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 011 245 A1 (MATSUSHITA ELECTRIC IND CO LTD [JP]) 21 June 2000 (2000-06-21)<br>* paragraph [0022] *<br>* paragraph [0031] *<br>* paragraphs [0077] - [0084] *<br>* paragraph [0102] *<br>* claims 1,6,9,11 *<br>* figures 10a,10b * | 1-4,8,9, 14-16 | INV.<br>H04L1/16<br>H04L1/18<br>H04L27/18<br>H04L27/34 |
| Y | US 2011/069772 A1 (VRZIC SOPHIE [CA] ET AL) 24 March 2011 (2011-03-24)<br>* paragraph [0079] *<br>* paragraph [0084] *<br>* paragraph [0123] *<br>* paragraphs [0166], [0167] *<br>* paragraphs [0171] - [0173] *<br>* paragraphs [0175], [0176] *<br>* paragraph [0178] *<br>* paragraph [0182] *<br>* paragraphs [0184], [0185] *<br>* paragraphs [0190] - [0192] *<br>* tables 3,4 *<br>* figures 9,10,14-16 * | 1-4,8,9, 14-16 | |
| Y | WO 03/056774 A1 (NORTEL NETWORKS LTD [CA]; NORTEL NETWORKS UK LTD [GB]) 10 July 2003 (2003-07-10)<br>* page 12, line 18 - page 13, line 3 *<br>* page 13, lines 24-27 *<br>* page 13, line 33 - page 14, line 6 *<br>* page 16, lines 14-21 *<br>* page 16, line 34 - page 17, line 32 *<br>* figures 1-4 * | 1-4,8,9, 14-16 | TECHNICAL FIELDS SEARCHED (IPC)<br><br>H04L<br>H03M |

The present search report has been drawn up for all claims

| Place of search | Date of completion of the search | Examiner |
|---|---|---|
| Munich | 2 July 2012 | Meister, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 29 0142

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2012

| Patent document cited in search report | | Publication date | Patent family member(s) | | Publication date |
|---|---|---|---|---|---|
| EP 1011245 | A1 | 21-06-2000 | AU | 4397299 A | 24-01-2000 |
| | | | CA | 2301226 A1 | 13-01-2000 |
| | | | CN | 1273732 A | 15-11-2000 |
| | | | EP | 1011245 A1 | 21-06-2000 |
| | | | JP | 2000031944 A | 28-01-2000 |
| | | | WO | 0002359 A1 | 13-01-2000 |
| US 2011069772 | A1 | 24-03-2011 | NONE | | |
| WO 03056774 | A1 | 10-07-2003 | AU | 2002360191 A1 | 15-07-2003 |
| | | | CA | 2470756 A1 | 10-07-2003 |
| | | | EP | 1457012 A1 | 15-09-2004 |
| | | | US | 7177371 B1 | 13-02-2007 |
| | | | WO | 03056774 A1 | 10-07-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1011245 A